# DEMANDE DE BREVET EUROPEEN

(11) **EP 0 875 154 A2**
(43) Date de publication de la demande: **04.11.1998**
(21) Numéro de dépôt: 98500099.1
(22) Date de dépôt: 23.04.1998
(51) Int. Cl.: A23L 1/216, A23L 1/32

(54) **Pommes de terre précuites, surgelées et conditionnées, applicables à la préparation d'omelettes**

(30) Priorité: 24.04.1997 ES 9700885; 16.04.1998 ES 9800802
(71) Demandeur: Munoz Galvez, Pedro, 28018 Madrid (ES)
(72) Inventeur: Munoz Galvez, Pedro, 28018 Madrid (ES)
(74) Mandataire: Plaza Fernandez-Villa, Luis

(57) **Abrégé**

Ensemble d'aliments précuits, surgelés et emballés, applicables à la préparation ponctuelle d'omelettes diverses, consistant à disposer d'une quantité de pommes de terre (1), qui sont traitées dans un procédé d'épluchage (2), pour être ultérieurement coupées (3), lavées (4) et soumises à une étape de friture (5) en huile végétale (7), en leur ajoutant une quantité de sel (8), et à introduire ultérieurement les pommes de terre (1), l'huile végétale (7) et le sel rajouté (8) à l'intérieur d'un emballage ou sachet (10) de préférence en polyéthylène, doté d'une ligne de coupe (11), en soumettant le tout à un procédé de surgélation (12), d'autres composants (9) pouvant être introduits en sus, comme par exemple des oignons, des champignons, du chorizo, du jambon ou du fromage.

## Description

### OBJET DE L'INVENTION

Le présent mémoire descriptif se rapporte à une demande de brevet d'invention relatif à un ensemble d'aliments précuits, surgelés et conditionnés applicables à la préparation ponctuelle d'omelettes diverses, ayant pour finalité évidente de disposer d'une variété d'aliments, soumis à une étape ou des étapes de précuisson, et qui sont par la suite conditionnés et soumis à la surgélation, l'ensemble des aliments étant réparti dans des emballages à capacité différente, permettant ainsi la décongélation des produits incorporés dans l'emballage, la possibilité d'utiliser un four à micro-ondes est aussi envisagée pour la décongélation, et en pouvant en tout cas, réaliser ultérieurement une omelette ou des omelettes de différentes natures, par l'addition préalable de la quantité d'oeufs correspondante.

### DOMAINE DE L'INVENTION

Cette invention a son application dans l'industrie consacrée à la fabrication de produits alimentaires précuits.

### ANTECEDENTS DE L'INVENTION

Le demandeur a connaissance de l'existence actuellement de nombreux produits qui, configurés ou distribués comme un ensemble de produits alimentaires, permettent la distribution d'un produit alimentaire élaboré au préalable ou pré-élaboré.

Il en est ainsi de la distribution connue des produits à base de pâtes, boulettes de viandes, steacks hachés, etc.

Le demandeur a aussi connaissance de l'existence actuelle d'un emballage, compartimenté à l'intérieur, dans lequel est incorporée une quantité adéquate de maïs, et dans le même emballage mais dans des compartiments différents, une quantité de sel et d'huile qui incorporé à un récipient, offre la possibilité de réaliser à l'aide d'une source de chaleur des pop-corn.

Le demandeur a aussi connaissance de l'existence de machines automatiques actionnées à l'aide de pièces de monnaie, pourvues à l'intérieur de chambres de réfrigération et de congélation à l'intérieur desquelles se trouvent incorporés différents aliments précuits, permettant après introduction des pièces de monnaie en fonction du produit demandé, et à l'aide d'un micro-ordinateur, de générer la sortie depuis la chambre de réfrigération ou de congélation d'un produit précuit, qui passe ensuite directement à un four à micro-ondes dont l'ouverture se trouve sur la partie supérieure, dans lequel l'aliment sélectionné est soumis à une étape de chaleur, pour être à disposition du consommateur une fois le procédé terminé, le produit se retirant depuis le four à micro-ondes à l'aide d'un poussoir qui met directement le produit à disposition du consommateur.

Pour l'élaboration d'une omelette aux pommes de terre, "à l'espagnole", la technique la plus traditionnelle et la plus connue consiste à prendre une quantité adéquate de pommes de terre et à les éplucher, les laver, les couper en rondelles suffisantes et y ajouter du sel.

Par la suite, les pommes de terre coupées et salées sont frites et puis les pommes de terre déjà frites sont mélangées à une quantité d'oeufs battus pour être ensuite mises dans une poêle afin d'obtenir la prise du mélange jusqu'à l'obtention de l'omelette demandée qui sera dorée et prise selon le goût du consommateur.

Une autre technique d'élaboration de ce plat se base sur l'utilisation d'un produit déjà commercialisé et qui consiste à utiliser des pommes de terre fraichement épluchées et coupées en rondelles auxquelles est ajoutée une quantité adéquate d'antioxydants et de stabilisateurs et qui doivent être conservées au frais à une température oscillant entre 2 et 4º.

Si l'on dispose de ce produit, on peut élaborer une omelette aux pommes de terre "à l'espagnole", en s'épargnant uniquement et exclusivement des opérations consistant à éplucher et à couper les pommes de terre, étant donné que le reste des opérations doit être réalisé de façon concrète.

Le demandeur n'a pas connaissance de l'existence actuelle d'un ensemble de produits, permettant l'obtention d'une omelette aux pommes de terre avec des oeufs battus et pouvant être distribués conventionnellement en surgelé.

### DESCRIPTION DE L'INVENTION

L'ensemble des aliments précuits, surgelés et conditionnés applicable à la préparation ponctuelle d'omelettes diverses que l'invention propose, constitue en soi-même une nouveauté évidente dans son champ d'application.

Plus concrètement, l'ensemble des aliments précuits, surgelés et conditionnés, applicables à la préparation ponctuelle d'omelettes diverses faisant l'objet de l'invention, est constitué à partir de l'introduction dans le sac ou emballage en matière plastique, de préférence en polyéthylène, qui peut comporter en option une ligne de perforations pour faciliter son ouverture de façon simplifiée, avec la configuration jugée utile, configuré de préférence comme un corps applati et avec un périmètre de préférence circulaire ou carré, occupant une superficie variable selon la quantité de produit alimentaire ou ensemble de produits alimentaires introduits à l'intérieur.

Les finalités de cet emballage sont celles de contenir l'ensemble des produits alimentaires, en permettant en même temps de doser de façon exacte la quantité nécessaire pour l'élaboration d'une omelette aux pommes de terre, en facilitant une manipulation commode et hygiénique de son contenu et en obtenant une décongélation rapide et homogène du produit contenu et en permettant l'usage du four à micro-ondes.

A l'intérieur du propre emballage, est introduite une quantité de pommes de terre épluchée au préalable, coupée en rondelles de grosseur pouvant être variable, généralement entre 2 et 5 m/m, lavée et frite en huile végétale propre à la consommation à la température adéquate, en ne dépassant jamais les 120º, afin d'éviter que les pommes de terre se ramollissent ou se dorent de trop, celles-ci étant ultérieurement salées faiblement et dosées en quantité pouvant varier en fonction de la dimension finale que devra avoir l'omelette, comme nous l'avons déjà dit précédemment. Elles sont ensuite emballées dans le sachet ou emballage cité pour être ultérieurement soumises à une étape de surgélation jusqu'à une température minimum de - 18ºC.

En tant que composants principaux de l'ensemble, sont envisagées les pommes de terre proprement dites, l'huile végétale retenue dans la friture de pomme de terres et le sel ajouté.

En marge de ces produits qui constituent les éléments de base, l'ensemble peut en contenir d'autres qui détermineront les différentes variétés de l'invention étant donné qu'en ajoutant certains aliments, on peut élaborer des omelettes aux goûts et variétés divers.

Par exemple, si on ajoute de l'oignon coupé et préfrit, l'omelette aux pommes de terre obtenue sera configurée comme une omelette aux pommes de terre et aux oignons.

On peut aussi ajouter à l'ensemble des rondelles de chorizo braisé, des petits morceaux de jambon, des morceaux de fromage, des champignons précuits et tranchés en petits morceaux, etc., etc.

Bien évidemment, les composants cités précédemment sont inclus dans l'ensemble des produits alimentaires surgelés dans l'emballage.

### DESCRIPTION DES DESSINS

Pour compléter la description que nous réalisons et afin d'aider à la compréhension des caractéristiques de l'invention, est joint à la présente un mémoire descriptif étant partie intégrante de ce dernier, une feuille de plans, dans laquelle les éléments suivants sont représentés à titre illustratif et non limitatif :

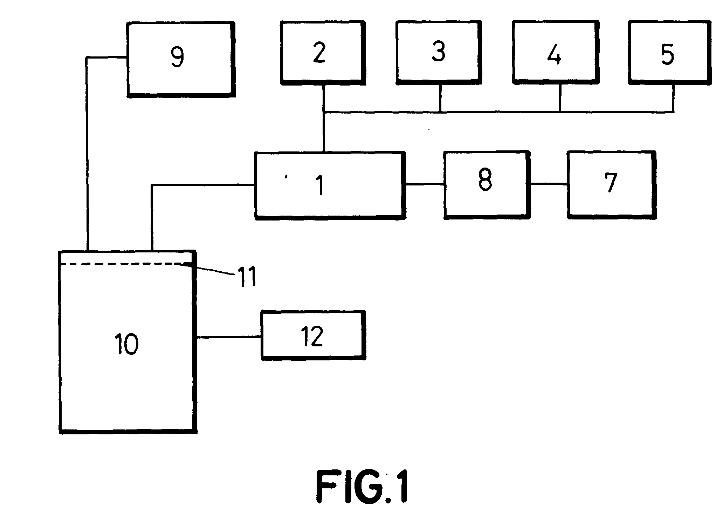

La figure numéro 1.- montre un petit diagramme de blocs, dans lequel on tente de faire figurer les différentes étapes et composants qui sont incorporés et sont utilisés dans l'ensemble des aliments précuits, surgelés et conditionnés, applicables à la préparation ponctuelle d'omelettes diverses.

### REALISATION PREFERABLE DE L'INVENTION

A la vue de la figure numéro 1, intégrée à titre d'exemple, on peut observer comment l'ensemble des aliments précuits, surgelés et conditionnés applicables à la préparation ponctuelle d'omelettes diverses, est configuré à partir de pommes de terres (1), qui sont soumises à un procédé d'épluchage, (2) de coupe (3), de lavage (4) et de friture (5), la température dans le procédé de friture ne dépassant jamais les 120º, afin que les pommes de terre ne se dorent ou ramollissent de trop, et qui sont salées (8).

Les pommes de terre (1) préfrites en huile végétale (7) et le sel (8) sont incorporés à l'intérieur d'un emballage (10) qui présente une ligne de coupe (11) afin de faciliter le retrait du produit qu'il contient.

Après l'introduction des pommes de terre (1) qui contiennent de l'huile végétale (7) provenant de leur friture et le sel ajouté (8), dans une quantité adéquate pour la préparation d'une omelette, elles sont soumises à un procédé de surgélation (12).

Ce procédé de surgélation (12) ne doit jamais être inférieur aux - 180º C.

Ultérieurement l'ensemble des aliments est réparti de façon conventionnelle en maintenant à tout moment la ligne de froid.

En option, à l'ensemble formé par les pommes de terre (1), l'huile végétale (7) et le sel (8), peuvent être ajoutés d'autres composants (9), comme par exemple des oignons, du chorizo braisé, du jambon, du fromage, des champignons, etc. introduits bien évidemment à l'intérieur de l'emballage (10) et soumis ensuite au procédé de surgélation (12).

Il n'est pas jugé nécessaire de nous étendre davantage sur cette description pour que tout expert en la matière comprenne la dimension de l'invention et les avantages qui en découlent.

Les matériaux, forme, dimensions et disposition des éléments seront susceptibles de variation à condition que cela n'altère pas les principes de l'invention.

Les termes dans lesquels a été décrit ce mémoire devront toujours être considérés au sens large et à titre non limitatif.

## Revendications

1. Ensemble d'aliments précuits, surgelés et conditionnés, applicables à la préparation ponctuelle d'omelettes diverses, caractérisé par le fait d'être constitué de pommes de terre (1), soumises à un procédé d'épluchage (2), de coupe (3), de lavage (4) et ultérieurement de friture (5) en huile végétale (7) en ajoutant du sel pendant la friture (5) en huile végétale (7), pour être introduites par la suite à l'intérieur d'un emballage (10) de préférence en polyéthylène, qui présente une perforation ou une ligne de coupe (11), et qui sera, après avoir été rendu hermétique, soumis à un procédé de surgélation (12) au cours duquel la température ne descendera jamais de -18º C.

2. Ensemble d'éléments précuits, surgelés et conditionnés, applicables à la préparation ponctuelle d'omelettes diverses, selon la première revendication, caractérisé par le fait qui peut être ajouté en option aux pommes de terre (1) précuitea, qui contiennent de l'huile végétale (7) et du sel (8), d'autres composants (9), tels que des oignons, du chorizo, du jambon, du fromage, des champignons ou d'autres similaires, ces produits étant introduits avec les pommes de terre (1), l'huile végétale (7) et le sel (8) à l'intérieur de l'emballage (10), et étant également soumis au procédé de surgélation (12).

3. Ensemble d'aliments précuits, surgelés et emballés, applicables à la préparation ponctuelle d'omelettes diverses, selon la première revendication, caractérisé parce le fait que les pommes de terre (1) soumises à un procédé de friture (5) en huile végétale (7), ne dépasseront pas la température de 120º pendant leur préparation.
